Europäisches Patentamt
European Patent Office
Office européen des brevets

(19)

(11) Publication number: **0 189 977 A1**

(12) **EUROPEAN PATENT APPLICATION**

(21) Application number: 86300141.8

(22) Date of filing: 10.01.86

(51) Int. Cl.[4]: C 07 F 7/18
C 07 F 7/22, A 01 N 55/00
A 01 N 55/04

(30) Priority: 17.01.85 GB 8501217

(43) Date of publication of application: 06.08.86 Bulletin 86/32

(84) Designated Contracting States: AT BE CH DE FR GB IT LI LU NL SE

(71) Applicant: FBC LIMITED
Hauxton
Cambridge CB2 5HU(GB)

(72) Inventor: Baillie, Alister Cameron
4 Vineyard Walk
Bottisham Cambridge(GB)

(72) Inventor: Cliff, Geoffrey Ross
22 Royston Road
Whittlesford Cambridge(GB)

(72) Inventor: Parsons, John Henry
7 Maypole Close
Saffron Walden Essex(GB)

(72) Inventor: Russell, Philip Eric
46 Church Lane
Sawston Cambridge(GB)

(74) Representative: Waldman, Ralph David et al,
Industrial Property Department FBC Limited Chesterford Park Research Station
Saffron Walden, Essex CB10 1XL(GB)

(54) **New sulphonanilides and fungicidal compositions containing them.**

(57) 1) Compounds of formula I

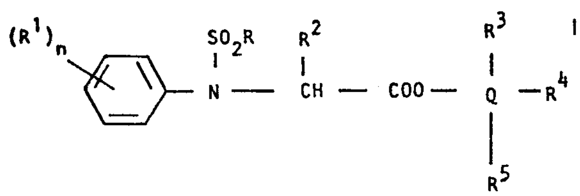

I

in which Q is Sn or Si;
R is alykl;
$R^1$ is alkyl or halogen;
$R^2$ is hydrogen or alkyl;
$R^3$, $R^4$ and $R^5$, which are the same or different, are optionally substituted alkyl, alkenyl, alkynyl, cycloalkyl or aryl; and n is 0 to 4, have fungicidal activity.

EP 0 189 977 A1

Case 85/01217

This invention relates to sulphonanilides and to their use in agriculture.

According to the invention there are provided compounds of formula I

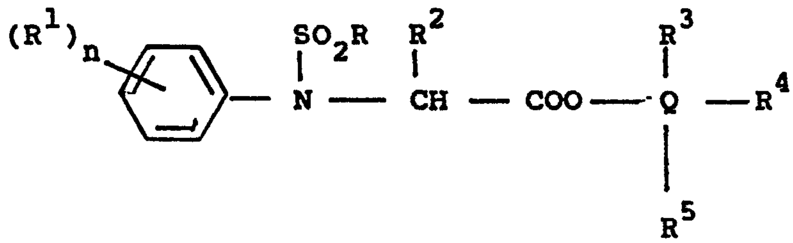

I

in which Q is Sn or Si;

R is alkyl;

$R^1$ is alkyl or halogen;

$R^2$ is hydrogen or alkyl;

$R^3$, $R^4$ and $R^5$, which are the same or different, are optionally substituted alkyl, alkenyl, alkynyl, cycloalkyl or aryl, and n is 0 to 4.

Compounds analogous to those of formula I, in which the substituted Q group is replaced by, for example hydrogen or alkyl, are known from G.B. Patent No 2012170.

Q is preferably Sn. R, $R^1$, $R^2$ are preferably methyl.

Alkyl groups are preferably of 1 to 4 carbon atoms, especially methyl. Substituents, when present, include

halogen, alkoxy (e.g. of 1 to 4 carbon atoms) and aryl. Aryl groups are usually phenyl, optionally substituted, eg. by halogen, haloalkyl, alkoxy or nitro. The term aryl may include heteroaryl groups such as thienyl, furyl or pyridyl. Cycloalkyl groups are usually of 3 to 8 carbon atoms especially cyclopentyl or cyclohexyl.

The compounds of the invention have activity as fungicides, especially against fungal diseases of plants. e.g. mildews, especially vine downy mildew (Plasmopara viticola). They are also active against powdery mildews such as barley powdery mildew (Erysiphe graminis) as well as being active against diseases such as rice blast (Pyricularia oryzae), wheat brown rust (Puccinia recondita) and potato blight (Phytophthora infestans).

The invention thus also provides a method of combating fungi at a locus infested or liable to be infested therewith, which comprises applying to the locus a compound of formula I.

The invention also provides an agricultural composition comprising a compound of formula I in admixture with an agronomically acceptable diluent or carrier.

The composition of the invention may of course include more than one compound of the invention.

In addition the composition can comprise one or more

additional active ingredients, for example compounds known to possess plant-growth regulant, herbicidal, fungicidal, insecticidal or acaricidal properties. Alternatively the compounds of the invention can be used in sequence with the other active ingredient. Fungicides which can be used in conjunction with the compounds of the present invention include maneb, mancozeb, zineb, thiram, propineb, benomyl, carbendazim, iprodione, vinclozolin, fosetyl-aluminium, sulphur, triadimefon, dichlofluanid, metalaxyl, furalaxyl, ofurace, benalaxyl, oxadixyl, cyprofuram, prochloraz (and metal complexes of this, e.g. the manganese chloride complex), guazatine, captan, captafol, folpet and various copper salts.

The diluent or carrier in the composition of the invention can be a solid or a liquid optionally in association with a surface-active agent, for example a dispersing agent, emulsifying agent or wetting agent. Suitable surface-active agents include anionic compounds such as a carboxylate, for example a metal carboxylate of a long chain fatty acid; an N-acylsarcosinate; mono- or di-esters of phosphoric acid with fatty alcohol ethoxylates or salts of such esters; fatty alcohol sulphates such as sodium dodecyl sulphate, sodium octadecyl sulphate or sodium cetyl sulphate; ethoxylated fatty alcohol sulphates; ethoxylated alkylphenol

sulphates; lignin sulphonates; petroleum sulphonates; alkyl-aryl sulphonates such as alkyl-benzene sulphonates or lower alkylnaphthalene sulphonates, e.g. butyl-naphthalene sulphonate; salts of sulphonated naphthalene-formaldehyde condensates; salts of sulphonated phenol-formaldehyde condensates; or more complex sulphonates such as the amide sulphonates, e.g. the sulphonated condensation product of oleic acid and N-methyl taurine or the dialkyl sulphosuccinates, e.g. the sodium sulphonate of dioctyl succinate. Nonionic agents include condensation products of fatty acid esters, fatty alcohols, fatty acid amides or fatty-alkyl- or alkenyl-substituted phenols with ethylene oxide, fatty esters of polyhydric alcohol ethers, e.g. sorbitan fatty acid esters, condensation products of such esters with ethylene oxide, e.g. polyoxyethylene sorbitan fatty acid esters, block copolymers of ethylene oxide and propylene oxide, acetylenic glycols such as 2,4,7,9-tetramethyl-5-decyn-4,7-diol, or ethoxylated acetylenic glycols.

Examples of a cationic surface-active agent include, for instance, an aliphatic mono-, di-, or polyamine as an acetate, naphthenate or oleate; an oxygen-containing amine such as an amine oxide or polyoxyethylene alkylamine; an amide-linked amine prepared by the condensation of a carboxylic acid with a di- or polyamine; or a quaternary

ammonium salt.

The compositions of the invention can take any form known in the art for the formulation of agrochemicals, for example, a solution, a dispersion, an aqueous emulsion, a dusting powder, a seed dressing, a fumigant, a smoke, a dispersible powder, an emulsifiable concentrate or granules. Moreover it can be in a suitable form for direct application or as a concentrate or primary composition which requires dilution with a suitable quantity of water or other diluent before application.

An emulsifiable concentrate comprises a compound of the invention dissolved in a water-immiscible solvent which is formed into an emulsion with water in the presence of an emulsifying agent.

A dusting powder comprises a compound of the invention intimately mixed and ground with a solid pulverulent diluent, for example, kaolin.

A granular solid comprises a compound of the invention associated with similar diluents to those which may be employed in dusting powders, but the mixture is granulated by known methods. Alternatively it comprises the active ingredient absorbed or adsorbed on a pre-granular diluent, for example, Fuller's earth, attapulgite or limestone grit.

Wettable powders, granules or grains usually comprise the active ingredient in admixture with a suitable

surfactant and an inert powder diluent such as china clay.

Another suitable concentrate is a flowable suspension concentrate which is formed by grinding the compound with water or other liquid, a wetting agent and a suspending agent.

The concentration of the active ingredient in the composition of the present invention, as applied to plants is preferably within the range of 0.01 to 3.0 per cent by weight, especially 0.01 to 1.0 per cent by weight. In a primary composition the amount of active ingredient can vary widely and can be, for example, from 5 to 95 per cent by weight of the composition.

In the method of the invention the compound is generally applied to seeds, plants or their habitat. Thus, the compound can be applied directly to the soil before, at or after drilling so that the presence of active compound in the soil can control the growth of fungi which may attack seeds. When the soil is treated directly the active compound can be applied in any manner which allows it to be intimately mixed with the soil such as by spraying, by broadcasting a solid form of granules, or by applying the active ingredient at the same time as drilling by inserting it in the same drill as the seeds. A suitable applications rate is within the range of from 0.05 to 20 kg per hectare, more preferably from 0.1 to 10

kg per hectare.

Alternatively the active compound can be applied directly to the plant by, for example, spraying or dusting either at the time when the fungus has begun to appear on the plant or before the appearance of fungus as protective measure. In both such cases the preferred mode of application is by foliar spraying. It is generally important to obtain good control of fungi in the early stages of plant growth as this is the time when the plant can be most severely damaged. The spray or dust can conveniently contain a pre- or post-emergence herbicide if this is thought necessary. Sometimes, it is practicable to treat the roots of a plant before or during planting, for example, by dipping the roots in a suitable liquid or solid composition. When the active compound is applied directly to the plant a suitable rate of application is from 0.01 to 10 kg. per hectare, preferably from 0.05 to 5 kg per hectare.

The compounds of the invention may be obtained by reacting a compound of formula II

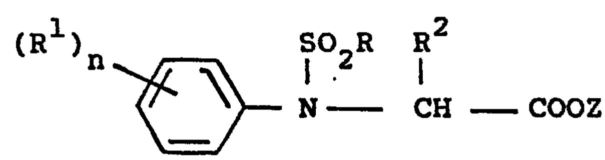

II

where Z is hydrogen or one equivalent of a metal e.g. sodium, with a compound of formula III

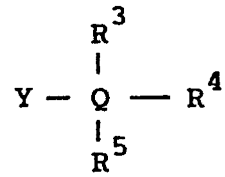

III

where Y is a leaving group, such as halogen e.g. chlorine.

When Q is Sn, Z is preferably a metal and the compound of formula II is generally obtained <u>in situ</u> from the free acid and a base such as an alkali metal hydroxide or hydride. When Q is Si, Z is preferably hydrogen and the reaction is generally carrried out in the presence of an organic base, e.g. an amine, such as imidazole.

Compounds of formula II are described in GB Pat. No. 2012170.

When $R^2$ is alkyl the products can be obtained in resolved form either by resolving the compound of formula I or by using a stereoisomer of formula II. The formula II stereoisomer can be obtained by conventional resolution methods or by reacting a compound of formula IV

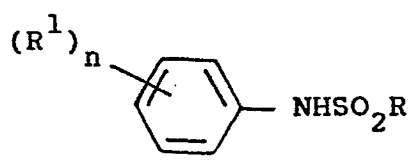

IV

with the appropriate stereoisomer of a compound of formula V

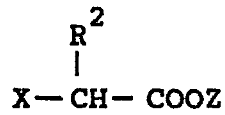

V

where X is a leaving group, such as halogen or tosyloxy.

The invention thus also includes optical isomers of the compounds of formula I.

The invention is illustrated in the following Examples. Structures of isolated novel compounds were confirmed by elemental and/or other appropriate analyses.

Example 1

A suspension of triphenyltin chloride (15.8g) in dichloromethane (150 ml) was added to a stirred mixture of N-(2,6-dimethylphenyl)-N-(methylsulphonyl)alanine (12.2g) and sodium hydroxide (1.8g) in water (150 ml). The mixture was stirred for 20 hours at room temperature and the organic layer separated, washed with water, dried and evaporated. The residue was recrystallised from a mixture of diisopropyl ether and ethyl acetate to give triphenyltin N-(2,6-dimethylphenyl)-N-(methylsulphonyl)alaninate, mp 131-2°C. (Compound 1)

Example 2

To a suspension of sodium hydride (0.31g of 80% suspension in oil) in tetrahydrofuran was added a solution of N-(2,6-dimethylphenyl)-N-(ethylsulphonyl)alanine (3.0g) in tetrahydrofuran. The reaction mixture was stirred and

heated to 50°C for 1/2 hour and a solution of triphenyltin chloride (3.85g) in tetrahydrofuran added. The mixture was stirred and heated under reflux for 6 hours and then stirred at room temperature overnight. It was then evaporated and the residue dissolved in dichloromethane, filtered through kieselguhr, washed with saturated aqueous sodium bicarbonate, dried and evaporated. The residue was boiled in a 1:1 mixture of ethyl acetate and isopropanol and filtered hot. The filtrate was evaporated and the solid was recrystallised from acetonitrile to give triphenyltin N-(2,6-dimethylphenyl)-N-(ethylsulphonyl)-alaninate, mp 180°C. (Compound 2)

Example 3

Tert-butyldimethylsilicon chloride (2.5g) was added to a stirred mixture of N-(2,6-dimethylphenyl)-N-(methylsulphonyl)alanine (3.0g) in dimethylformamide (30 ml) at room temperature. Imidazole (1.2g) was added and the mixture stirred for one and a half days. The mixture was then poured into water and extracted with diethyl ether. The extract was dried and evaporated under reduced pressure and the residue recrystallised from light petroleum (bp 60-80°C) to give tert-butyldimethylsilicon N-(2,6-dimethylphenyl)-N-(methylsulphonyl)alaninate, mp 131-2°C. (Compound 3)

0189977

Example 4

In a similar manner to the previous examples, the following compounds were obtained.

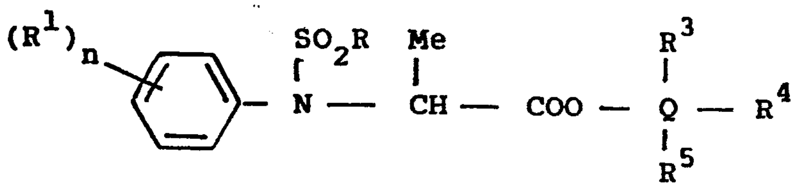

I

| Cpd | $R^1_n$ | R | $R^3$ | $R^4$ | $R^5$ | mp(°C) |
|---|---|---|---|---|---|---|
| 4 | 2,6-$Me_2$ | Sn | Bu | Bu | Bu | 62-4 |
| 5 | 2,6-$Me_2$ | Sn | Me | Me | Me | 157-9 |
| 6 | 2,6-$Me_2$ | Si | $Bu^t$ | Ph | Ph | 184-6 |
| 7 | 2,6-$Et_2$ | Sn | Ph | Ph | Ph | 170-2 |
| 8 | 3-Cl | Sn | Ph | Ph | Ph | 126 |
| 9 | 2-Cl-6-Me | Sn | Ph | Ph | Ph | 139-41 |
| 10 | 2,5-$Cl_2$ | Sn | Ph | Ph | Ph | 140-2 |
| 11 | 2,4,6-$Me_3$ | Sn | Ph | Ph | Ph | 149 |
| 12 | 2,6-$Cl_2$ | Sn | Ph | Ph | Ph | 114-6 |
| 13 | - | Sn | Ph | Ph | Ph | 167-9 |
| 14 | 4-F | Sn | Ph | Ph | Ph | 132-4 |
| 15 | 2,4-$F_2$ | Sn | Ph | Ph | Ph | 138-41 |

Example 5

The stereoisomers of compound 1 were prepared by the method of Example 2, using the appropriate resolved alanine as starting material. These had themselves been prepared from 2',6'-dimethylmethanesulphonanilide and the appropriate resolved p-toluenesulphonate ester of ethyl lactate followed by hydrolysis to give the free acid. There was thus obtained the S-isomer of triphenyltin N-(2,6-dimethylphenyl)-N-(methylsulphonyl)alaninate, mp 118-20°C and having $[\alpha]_D$ = +9.8°±0.8. (Compound 16) and the R-isomer of triphenyltin N-(2,6-dimethylphenyl)-N-(methanesulphonyl)alaninate, mp 118-20°C and having $[\alpha]_D$ = -8.5°±0.8. (Compound 17)

Example 6

This example illustrates a typical concentrate that can be formulated from compounds of the invention.

Wettable powder

| | |
|---|---|
| Compound of the invention | 25% w/w |
| Sodium lignosulphonate | 5% w/w |
| China clay | 70% w/w |

Example 7

Compounds of the invention were subjected to various tests to assess their activity against the following:

*Erysiphe graminis*: barley powdery mildew (EG)

*Puccinia recondita*: brown leaf rust of wheat (PR)

*Phytophthora infestans*: potato blight (PI)

*Plasmopara viticola:* vine downy mildew (PV)

The compounds were formulated in aqueous acetone with Tween 20 wetter to give a concentration of 500 ppm compound/125 ppm wetter/20,000 ppm acetone. For cereals, Pluronic L61 (ethylene oxide/propylene oxide block copolymer) is added (1000 ppm) as an additional wetter. Plants are treated with the diluted suspensions and then inoculated, 24 hours after treatment with test compound, by spraying with spore suspensions of the fungi and then incubating in a humid atmosphere: >98% RH, or by shaking diseased material over the treated plants in the case of EG, as summarised in Table 1.

Table 1 Environmental conditions during incubation

| Pathogen | Incubation time (days) | Temperature day | Temperature night | Light conditions per day | Duration of high humidity (days) |
|---|---|---|---|---|---|
| E. graminis | 7 | 18 | 14 | 16 hrs light/ 8 hrs dark | |
| P. recondita | 12 | 18 | 14 | 1 day dark, 16 hrs light/ 8 hrs dark | 1 |
| P. infestans | 4 | 14 | 10 | 17 hrs light/ 7hrs dark | 1 |
| P. viticola | 11 | 18 | 14 | 16 hrs light/ 8 hrs dark | 11 |

After the appropriate period of incubation, the degree of infection of the leaf surface is visually estimated. A compound is considered active if it gives greater than 50% control of the disease at a concentration of 500 ppm (w/v) or less.

Activities were demonstrated as follows (+=active).

| Compound No | EG | PR | PI | PV |
|---|---|---|---|---|
| 1 | + | + | + | + |
| 2 | + | + | + | + |
| 3 | | | | + |
| 4 | | + | | |
| 5 | | + | | |
| 6 | + | | | |
| 7 | + | + | | + |
| 8 | | + | + | + |
| 9 | | + | + | + |
| 10 | + | + | + | + |
| 11 | | + | + | + |
| 12 | | + | + | + |
| 16 | | + | + | + |
| 17 | | + | + | + |

Claims

1) A compound of formula I

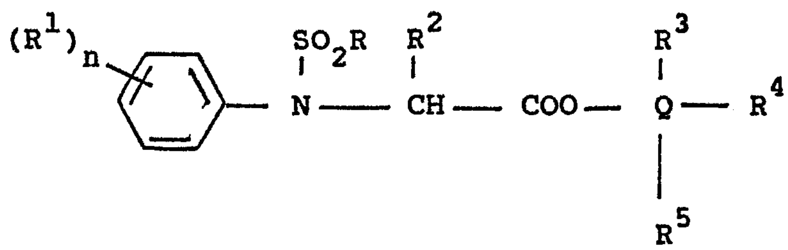

I

in which Q is Sn or Si; R is alkyl; $R^1$ is alkyl or halogen; $R^2$ is hydrogen or alkyl; $R^3$, $R^4$ and $R^5$, which are the same or different, are optionally substituted alkyl, alkenyl, alkynyl, cycloalkyl or aryl; and n is 0 to 4.

2) A compound according to claim 1 in which Q is Sn.

3) A compound according to claim 1 or 2 in which R is methyl.

4) A compound according to any one of claims 1 to 3 in which $R^2$ is methyl.

5) A compound according to any one of the preceding claims in which $R^3$, $R^4$ and $R^5$ are phenyl.

6) An agricultural composition comprising a compound claimed in any one of the preceding claims in admixture with an agriculturally acceptable diluent or carrier.

European Patent Office

# EUROPEAN SEARCH REPORT

0189977

Application number

EP 86 30 0141

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| A | EP-A-0 101 404 (CIBA-GEIGY)<br>* Claims *<br>--- | | C 07 F 7/18<br>C 07 F 7/22<br>A 01 N 55/00<br>A 01 N 55/04 |
| A | FR-A-1 173 196 (FARBWERKE HOECHST)<br>* Page 1 *<br>----- | | |
| | | | TECHNICAL FIELDS SEARCHED (Int. Cl.4) |
| | | | C 07 F 7/00<br>A 01 N 55/00 |

The present search report has been drawn up for all claims

| Place of search | Date of completion of the search | Examiner |
|---|---|---|
| THE HAGUE | 24-04-1986 | PAUWELS G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82